# EUROPEAN PATENT SPECIFICATION

(11) **EP 1 990 120 B1**
(45) Date of publication and mention of the grant of the patent: **03.07.2013**
(21) Application number: 08008721.6
(22) Date of filing: 09.05.2008
(51) Int. Cl.: B23D 47/04, B27B 5/07

(54) **Sawing machine of the vertical type**
Vertikal-Sägemaschine
Machine de sciage verticale

(30) Priority: 09.05.2007 NL 1033823
(43) Date of publication of application: 12.11.2008
(73) Proprietor: Elcon Beheer BV, 2451 VV Leimuiden (NL)
(72) Inventor: Meijer, Piet, 2451 VV Leimuiden (NL)
(74) Representative: Assendelft, Jacobus H.W.

(56) References cited:
- EP-A- 0 602 574
- GB-A- 1 449 763
- US-A- 4 181 054

## Description

This invention relates to a sawing machine according to the preamble of claim 1, such a machine is known from GB 144 97 63. The invention also relates to a method of operating such a machine.

A vertical sheet sawing machine is e.g. disclosed in NL-A-9100778, EP-A-0512640, and US-A-4181054, which can be used as technical background. GB1449763 **and** EP0602574 **are most relevant prior art documents.**

Another vertical sheet sawing machine is disclosed in EP-A-0451111. On the one hand it refers to an earlier proposal, to divide the sheet, starting from below, in horizontal strips and dividing those further by vertical cuts, while the still uncut sheet part above it is retained by a holding device at the top edge. One says about this earlier proposal, that it is unrealistic. On the other hand as an invention it is disclosed, to divide the sheet, starting from the top, in horizontal strips. After a horizontal strip is cut, it is gripped at a side edge by a clamp which is horizontally and vertically displaceable parallel to the plane of the sheet and is pulled aside by said clamp while sliding with its lower edge across the uncut sheet part there below. Without taking the strip from the machine a sideways from the uncut sheet part projecting and by the clamp held piece can be divided by a vertical cut. The part that is cut loose from the strip is then taken from the clamp, after which the clamp is displaced aside to grip the side edge of the uncut strip part. Then the uncut strip part is pulled aside by the clamp, such that once again a strip piece can be cut. After the strip is cut in pieces in this manner a next top strip is cut from the sheet part and the clamp is lowered to a level of this next top strip after which the process of each time pulling the top strip sideways with the clamp and dividing it is repeated. Such a machine is not yet presented on the market. The reason for this could be because of the following disadvantages: The cut top strip slides across the top edge of the sheet part there below which easily causes damage to strip and/or sheet part; a safe and the quality of the sheet material saving holding of the sheet piece (held by the clamp) to be cut from the strip seems in conflict with other requirements, such as low investment and operating costs, high productivity, flexibility.

Nowadays Machinefabriek Elcon BV (Leimuiden, Nederland) successfully supplies the Advance vertical sheet sawing machine. Contrary to the in EP-A-0451111 indicated disadvantages, Elcon BV succeeded to apply for this Advance a technique based on the earlier proposal as discussed in EP-A-0451111. This Advance comprises, as main parts: an upright, a supporting bed for the sheet to be cut providing frame of horizontal strips, along the lower and top edge of which a the circle sawing blade carrying portal structure is guided to be displaceable in width wise direction of the supporting bed. The circle sawing blade is displaceable along the portal structure. Thus the sawing blade can move horizontally and vertically across the supporting bed. Along the lower edge of the supporting bed a forwardly from the bed projecting supporting ledge carried by free rotating rolls extends. Closely above these supporting rolls there is below the frame of strips a fixed strip providing an inclined barrier to guide the lower edge of a sheet towards the supporting rolls during positioning it into the machine. The supporting bed is furthermore provided with two between the top and bottom edge according to a straight line displaceable sheet clamps. These sheet clamps grip the top edge of a sheet which bears against the supporting bed. This sheet bears with its lower edge onto the supporting ledge **or** is suspended slightly above it from the sheet clamps. Thus horizontal strips can be cut from the sheet, starting from below. After a strip is removed, one can lower the sheet with the aid of the sheet clamps onto the supporting ledge or just above it, to cut a next strip. By manually sideways moving a just cut strip bearing onto the supporting ledge, the strip can be cut vertically while still bearing against the supporting bed. To accurately divide the strip the supporting bed is provided with an adjustable stop to limit the sideways movement of the just cut strip according to desire. If a horizontal cut joins a strip of the frame, the frame is moved up or down such that the planned cut no longer joins a strip of the frame. This displacement of the frame of strips is independent from the displacement of the sheet clamps.

Thus, with the Advance a sheet piece can be accurately both in length and width taken from a sheet, or bundle of sheets, starting from below. GB1449763 **(cited above) discloses a similar machine.**

The object of this invention is a further improved sawing machine, particularly a further development of the Advance or its technical basis relating to dividing the sheet starting from below. More preferably the improvement can be applied to existing machines.

Thus, according to the invention, a sawing machine is provided as defined by the features of **claim 1. Claim 7 provides a method** of operating a sawing machine generally in accordance with claim 1. In the following the second clamping or retaining means is called "strip clamp". Preferably the sheet is exclusively displaceable into the first and/or second direction by the first and second, respectively, clamping means, for which one or both clamping means are e.g. exclusively displaceable according to a straight line.

Preferably means are provided with which the strip clamp is not (or substantially not) or only slightly displaceable in the first/upward direction, e.g. for a distance less then half of a quarter of the dimension of the supporting bed in this direction. Means which provide a larger displacement into this direction for the strip clamp (such as with EP-A-0451111 wherein said means extend the complete height of the supporting bed) are conflicting and costly. Experiences have shown that if dividing the sheet into strips starting from below, such a large displacement is not required. The displacement in said direction can be limited to an amount to e.g. take tolerances and clearance. Thus a driving and guiding means for displacement in said direction is superfluous.

The strip clamp is preferably designed to grip the strip at low level, preferably a lower corner. Preferably as low as possible with a view to a strip which is as thin as possible.

Preferably the machine is operated such that the strip clamp grips the one side edge of the strip and pushes the strip sideways through the machine to bring the opposite side edge beyond the sheet part within the machine. The strip clamp can then retain the strip permanently during successively cutting it, while a from the strip cut piece can be immediately taken from the machine. This is an advantage for the speed and accuracy of operation. In this connection it will be required with most embodiments that the strip clamp and its driving and guiding means are as compact as possible to avoid conflicts with the sheet being cut and other components of the machine. The strip clamp moves during this operation more and more at a distance from above or below it. This operation is e.g. impossible with a machine based on EP-A-0451111, due to the dimensions of the driving/guiding means to displace the strip clamp, which as a result can only be used to tow the strip, such that the strip clamp comes as little as possible above or below the sheet part.

Preferably the driving and/or guiding means, or component of it, is present below the supporting part (e.g. rollers) supporting the into the machine located sheet with its lower edge. E.g. this is a toothed track or screw spindle or guiding rail. The strip clamp is preferably located above said supporting part.

Its is most preferable if the driving and/or guiding means are located at low level at the machine, preferably merely below the supporting part.

The strip clamp and/or sheet clamp are preferably pneumatically driven. The strip clamp and/or sheet clamp preferably comprise a stationary jaw and a towards and away from it movable (e.g. pivotably mounted) jaw. The movable jaw is preferably located at the side such that it engages the side of the sheet within the machine facing away from the supporting bed. Alternatives are feasible, such as a suction cup or two stops which each engage one of the side edges of the strip to keep it captured between them.

For the location of the driving/guiding means of the strip clamp, avoiding contamination plays a role.

The strip clamp is preferably located at a distance from its guiding means, relative to the direction of displacement of the strip clamp, e.g. at an outrigger that is mounted to the structure containing the driving and/or guiding means or part of it. Thus the chance for interference with other elements of the machine or sheet is minimalised and also a "floating" suspension of the clamp is realised. This floating suspension is preferably limited to the upward direction. Thus a sheet or strip with an irregular lower edge can after all smoothly displaced across the supporting rolls, while retained by the strip clamp.

The drive of the strip clamp and/or sheet clamp is preferably electronically controlled, e.g. by using electronic sensors and a conveniently programmed computer.

The sawing machine of the invention preferably has one or more of the following elements: a frame with means, such as a frame of strips, to supporting on or against it a sheet for sawing (preferably the sheet bears with its lower side); first guiding means to support and in a first direction guide a coupling part to which two guiding means are mounted that are designed to support and guide in a the first direction crossing second direction a sawing element (e.g. circle saw), wherein both directions run parallel to the sheet to be sawn, such that the sawing element can be displaced in a plane parallel to the sheet and is able to make from the front a cut in the sheet; vacuum means with a close to the sheet located vacuum nozzle for removing parts that are released during sawing; means to support de sheet, or cut part of it, along an edge (preferably the lower edge); means to (preferably displaceably retain) the sheet to be sawn (preferably close to the top edge); means to keep the means supporting the sheet away from the sawing element during sawing. Last mentioned means are particularly designed to avoid that the supporting means (the frame of strips supporting the sheet to be sawn) are cut and are as a rule designed to displace the horizontally extending strips vertically in case a strip corresponds to a horizontal cut to be made. Preferably last mentioned means are acting independent from the retaining means (e.g. such that if the supporting means are displaced, the retaining means do not move with them). The sawing element will typically be part of a sawing apparatus with e.g. motor to drive the sawing element. As the sawing element use can be made of an alternative processing element to divide the sheet material in length and/or width. The first and second guiding means and the coupling part can e.g. comprise a portal structure and function as control and/or guiding means, to move the sawing element along a preferably straight track across the supporting bed.

The invention is now illustrated by way of a the invention non-limiting, at this time preferred embodiment, referring to the enclosed drawing, that shows in:
Fig. 1 a perspective of a part of a sawing machine;
Fig. 2 a front view of a part of fig. 1;
Fig. 3 a side view of detail III of fig. 2.

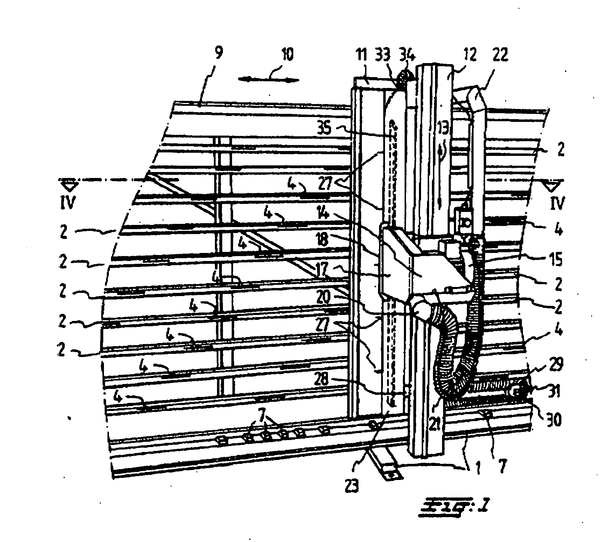

Fig. 1 shows a sawing machine of vertical type, according to fig. 1 of NL-A-9100778. For a further discussion of the in this figure shown details reference is made to this publication. In fig. 1 the same reference numbers are used as in NL-A-9100778 for the same elements.

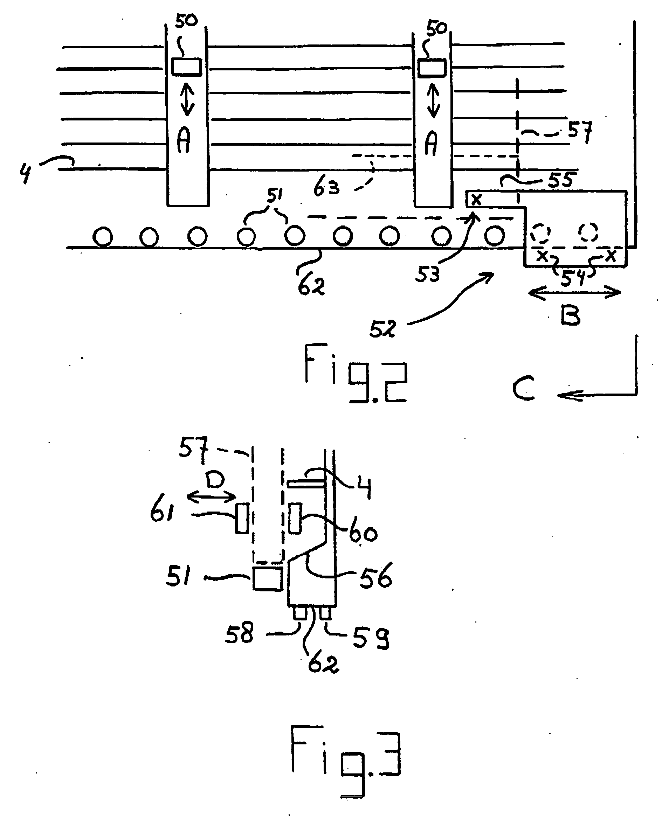

Fig. 2 shows schematically a part of the frame of strips with features incorporated for the two exclusively vertically displaceable (indicated with arrow A) sheet clamps 50, which are e.g. synchronous driven by means of e.g. for each an own screw spindle. Also the rollers 51 are shown onto which the sheet will bear with its lower edge. 52 generally indicates the system of strip clamp, its suspension, drive and guide. The location of the strip clamp in this system is indicated by 53; the location of the guiding wheels 54 engaging a guiding rail 59. The horizontal distance (in the direction of arrow B) between 53 and 54 is clearly shown, for which 53 is mounted to an outrigger 55. A sheet located in the machine is shown in phantom 57. The system 52 is exclusively displaceable in the direction of arrow B and is shown in the extreme right hand position. This is the starting position in which a sheet 57 is positioned into the machine. By providing a horizontal cut 63, there below a lowest strip is made which is retained by the strip clamp 53. Strip clamp 53 displaces to the left in the drawing, further and further below the sheet part (the part of the sheet 57 above the cut 63), pushing the strip forward.

Fig. 3 shows the lower part of the machine, as seen from the direction of arrow C in fig. 2 and the sheet 57. Of the system 52 only the fixed jaw 60 and the movable (in the direction of arrow D) clamping jaw 61 of the strip clamp 53 are shown. 56 indicates the inclined downward extending supporting strip below the strips 4. Below the strips 4 at a level below the rolls 51 there is a toothed track 58 and a guiding rail 59 which are mutually parallel and extend in the direction of arrow B. The strip clamp 53 is displaced in the direction of arrow B by a motor driven and to the system 52 belonging gear wheel which engages the toothed track 58. Guidance of system 52 is guaranteed by wheels 54 engaging rail 59 and being part of system 52. The fixed clamping jaw 60 is located below strips 4 and above strip 56. Movable clamping jaw 61 is located at the other side of the sheet 57 directly opposite jaw 60. The to the sheet 57 directed surface of clamping jaw 60 is present approximately within the supporting surface for the sheet as provided by the strips 4, or projects in the direction of the sheet 57 slightly beyond it. The sheet clamps 50 are designed in a similar manner.

The comparatively limited space that is available for the system 52 with the strip clamp 53, etc. is clearly visible. However, one has been successful to add system 52.

An alternative is feasible, wherein the sheet clamps 50 are absent.

Preferably the sheet manipulator engages two mutually spaced locations of the sheet, and/or the sheet manipulator engages a single location at the sheet/strip. The elements of the sheet manipulator engaging the sheet are preferably connected to driving/displacing means to displace them substantially parallel and/or synchronous. The strip manipulator preferably engages the strip/sheet in an area below the minimum level in which the sheet manipulator can engage the sheet.

## Claims

1. A sawing machine, of vertical type, with: a first clamping or retaining means (50) to accurately move upward a sheet (57) to be sawn against a supporting bed bearing ;
**CHARACTERISED BY**
a) a second clamping or retaining means (53) to sideways displace a part cut from the sheet, consisting of a strip, present in the machine, bearing against the supporting bed,
b) which second clamping or retaining means (53) is designed to clamp said strip, and
c) the guidance of the second clamping or retaining means (53) is located merely at low level of the machine, preferably merely below a supporting part (51) onto which the located sheet bears with its lower edge into the machine,
d) the machine is designed to be operated such that the strip clamp engages one side edge of the strip and pushes it sideways through the machine, to take the opposite side edge beyond the sheet part within the machine

2. Machine according to claim 1, wherein the second clamping or retaining means (53) to engages the strip at low level, preferably at a lower edge.

3. Machine according to claim 1, or 2, wherein the second clamping or retaining means (53) is suspended floatingly.

4. Machine according to any of claims 1-3, wherein the second clamping or retaining means (53) is spaced from its guiding means (54) relative to the displacement direction of the second means clamping or retaining (53), and is preferably mounted on an outrigger (55)

5. Machine according to any of claims 1-4, wherein the first clamping means (50) engages at two mutually spaced locations.

6. Machine according to any of claims 1-5, designed such that the second clamping or retaining means (53) engages the strip at a single location.

7. Method of operating a sawing machine, of vertical type, said machine comprising: a first clamping or retaining means (50) to accurately move in an upward direction a sheet (57) to be sawn against an upright supporting bed bearing ; and a second clamping or retaining means (53) to displace sideways a part, consisting of a strip, cut from the lower side of the sheet, which part is present in the machine, bearing against the supporting bed, said clamping or retaining means (53) are designed to clamp said strip;
wherein said machine is operated such that a strip is cut from the lower side of the sheet and the second clamping or retaining means (53) engages one side edge of the strip, cut from the sheet, at low level, preferably at a lower corner, and pushes it sideways through the machine, while the strip bears with its lower side onto a supporting part (51) of the machine, such that the second clamping or retaining means (53) takes the opposite side edge of the strip beyond the sheet part within the machine, during which the sheet and strip remain bearing against the supporting bed.

8. Method according to claim 7, wherein said second clamping or retaining means (53) passes below the sheet part within the machine while pushing the strip sideways through the machine.

9. Method according to claim 7 or 8, said strip is pushed stepwise sideways by the strip clamp (53) through the machine and after a movement step the strip is divided sideways and a strip part is removed from the machine such that the strip part engaged by the strip clamp is removed last, after which one lowers the sheet to cut a next strip from its lower part.

## Patentansprüche

1. Eine Sägemaschine, vertikaler Art, mit: ein erstes Klammer- oder Haltemittel (50) zum genauen aufwärts bewegen einer gegen dem Unterstützungsbett stützenden, zu sägen Platte (57);
**Gekennzeichnet durch**
a) ein zweites Klammer- oder Haltemittel (53) um ein von der gegen dem Unterstützungsbett stützenden Platte in der Maschine geschnittenes Teil, ein Streife, zur Seite zu bewegen,
b) welcher zweites Klammer- oder Haltemittel (53) zum klammern des Streifes bestimmt ist, und
c) die Führung des zweiten Klammer- oder Haltemittels befindet sich nur auf niedrigem Niveau der Maschine, bevorzugt nur unter dem Unterstützungsteil (51) auf welchem die in der Maschine aufgespannten Platte mit seiner unteren Kante stützt,
d) die Maschine ist bestimmt um zu arbeiten so daß die Streifeklammer der eine Seitenrand des Streifes ergreift und diese zur Seite **durch** der Maschine treibt, um den gegenüberliegenden Seitenrand an dem Plattenstück in der Maschine vorbei zu bewegen.

2. Maschine gemäß Anspruch 1, wobei das zweite Klammer- oder Haltemittel (53) bestimmt ist der Streife auf niedrigem Niveau zu greifen, z.B. eine Unterrand.

3. Maschine gemäß Anspruch 1, oder 2, wobei das zweite Klammer- oder Haltemittel (53) schwebend gestützt ist.

4. Maschine gemäß eine der Ansprüche 1-3, wobei das zweite Klammer- oder Haltemittel (53) beabstandet ist zu seinem Führungmittel (54) bezüglich der Verschiebungsrichtung des zweiten Klammer- oder Haltemittels (53), z.B. an einen Ausleger (55) montiert ist.

5. Maschine gemäß eine der Ansprüche 1-4, geeignet so daß das erste Klammermittel (50) an zwei räumlich getrennten Orten angreift.

6. Maschine gemäß eine der Ansprüche 1-5, bestimmt so daß das zweite Klammer- oder Haltemittel (53) den Streife an einer einzigen Stelle angreift.

7. Verfahren zum betreiben einer Sägemaschine vertikaler Art, welcher Maschine umfasst: ein erstes Klammer- oder Haltemittel (50) zum genauen aufwärts bewegen einer gegen dem Unterstützungsbett stützenden, zu sägen Platte (57); und ein zweites Klammer- oder Haltemittel (53) um ein von der gegen dem Unterstützungsbett stützenden Platte in der Maschine geschnittenes Teil, ein Streife, zur Seite zu bewegen, welcher Klammer- oder Haltemittel (53) zum klammern des Streifes bestimmt ist, wobei die Maschine arbeitet so daß einen Streife von der unteren Seite der Platte geschnitten wird und das zweite Klammer- oder Haltemittel (53) den einen Seitenrand des Streifes, von der Platte geschnitten, auf niedrigem Niveau, bevorzugt eine untere Ecke, ergreift und diese zur Seite durch der Maschine treibt, wobei der Streife mit seiner unteren Kante auf dem Unterstützungsteil (51) der Maschine stützt, so daß das zweite Klammer- oder Haltemittel (53) den gegenüberliegenden Seitenrand des Streifes an dem Plattenstück in der Maschine vorbei bewegt, während die Platte und der Streife gegen dem Unterstützungsbett stützen bleiben.

8. Verfahren gemäß Anspruch 7, wobei das zweite Klammer- oder Haltemittel (53) unter das Plattenstück in der Maschine passiert während der Streife zur Seite durch die Maschine getrieben wird.

9. Verfahren gemäß Anspruch 7 oder 8, der Streife wird schrittweise zur Seite durch die Maschine getrieben von der Streifenklammer (53) und nach eine Bewegungsschritt wird den Streife seitlich geteilt und ein Streifenstück wird von der Maschine entfernt so dass das von der Streifenklammer gehalten Streifenstück zuletzt entfernt wird, wonach die Platte niedergelassen wird um einem nächsten Streife von unten zu schneiden.

## Revendications

1. Machine de sciage verticale avec: un premier moyen de pincer ou tenir (50) déplacé vers le haut une plaque (57) à scier appuyé contre un lit d'appui (57);
CHARACTERISE en ce que
a) un deuxième moyen de pincer ou tenir (53) pour déplacer sur le côté une pièce scié du plaque, étant une bande, positionné dans la machine, appuie contre le lit d'appui,
b) le deuxième moyen de pincer ou tenir (53) a visé pour pincer la bande, et
c) le conduction du deuxième moyen de pincer ou tenir est exclusivement positionné à une faible niveau de la machine, de préférence exclusivement sous la partie de soutien (51) sur lequel la plaque, positionné dans la machine, appuie avec le bord inférieur,
d) la machine est visé pour opérer tel que la pince de bande saisit le bord latéral de la bande et pousse la bande sur le côté à travers la machine, de telle sorte que le côté opposé vient au-delà de la plaque dans la machine.

2. Machine selon la revendication 1, dans laquelle le deuxième moyen de pincer ou tenir (53) a visé pour saisir la bande à une faible niveau, par exemple un bord inférieur.

3. Machine selon la revendication 1 ou 2, dans laquelle le deuxième moyen de pincer ou tenir (53) est appuyé flottable.

4. Machine selon l'une des revendications 1-3, dans laquelle le deuxième moyen de pincer ou tenir (53) est loin du moyen de conduction (54) relative à la direction de déplacement du deuxième moyen de pincer ou tenir (53), par exemple est monté à une potence (55).

5. Machine selon l'une des revendications 1-4, visé tel que le premier moyen de pincer (50) pince à deux positions espacées.

6. Machine selon l'une des revendications 1-5, visé tel que le deuxième moyen de pincer ou tenir (53) pince la bande à une position unique.

7. Procédé de travaille une machine de sciage verticale, la machine comprenne: un premier moyen de pincer ou tenir (50) déplacé vers le haut une plaque (57) à scier appuyé contre un lit d'appui (57); et un deuxième moyen de pincer ou tenir (53) pour déplacer sur le côté une pièce scié du plaque, étant une bande, positionné dans la machine, appuyé contre le lit d'appui, le moyen (53) a visé pour pincer la bande; la machine travaille tel que une bande est scié du bord inférieur du plaque et le deuxième moyen de pincer ou tenir (53) pince un bord latéral de la bande, scié du plaque, à une faible niveau, de préférence une coin inférieur, et pousse la bande sur le côté à travers la machine pendent la bande appuie avec le bord inférieur sur la partie de soutien (51) de la machine de telle sorte que le deuxième moyen de pincer ou tenir (53) déplace le côté opposé de la bande au-delà de la plaque dans la machine, pendent que le plaque et la bande appuient contre le lit d'appui.

8. Procédé selon la revendication 7, en ce que le deuxième moyen de pincer ou tenir (53) passé sous le plaque dans la machine pendent la bande est déplacé sur le côté.

9. Procédé selon la revendication 7 ou 8, la bande est poussé sur le côté par la pince de bande (53) étape par étape à travers la machine et après une étape de motion la bande est sectionner sur le côté et une partie de la bande est retirer de la machine tel que la partie de la bande saisit par la pince de bande est retirer le dernier, et ensuite on abaisse le plaque pour sectionné une bande suivante de la pièce inférieur.
